# EUROPEAN PATENT SPECIFICATION

(11) **EP 1 310 202 B1**
(45) Date of publication and mention of the grant of the patent: **23.06.2010**
(21) Application number: 02079755.1
(22) Date of filing: 12.11.2002
(51) Int. Cl.: A47L 9/24

(54) **Articulated joint for rigid tubes equipping electric household appliances**
Gelenkige Verbindung von festen Rohren für elektrische Haushaltsgeräte
Joint articulé destiné à relier des conduites rigides pour appareil domestique électrique

(30) Priority: 13.11.2001 IT MO20010215
(43) Date of publication of application: 14.05.2003
(73) Proprietor: NEXT-AT S.r.l., 41100 Modena (IT); New Ermes Europe S.r.l., 2120 Crosio della Valle (VA) (IT)
(72) Inventor: Pineschi, Massimiliano, 41010 Villanova San Pancrazio (Modena) (IT)
(74) Representative: Colombo, Stefano Paolo

(56) References cited:
- EP-A- 0 875 195
- WO-A-00/45080
- WO-A-00/65978
- WO-A-01/97673
- DE-U- 29 915 879
- GB-A- 1 285 803
- GB-A- 1 551 429

## Description

The present invention relates to an articulated joint for rigid tubes equipping electric household appliances.

It is known that some types of electric household appliances, such as vacuum cleaners, electric brooms and the like which can be manually manoeuvred, are equipped with rigid tubes which can be assembled together so as to form a tube of adequate length allowing the user to grip and guide it in order to reach the places where dust collects.

These tubes are axially hollow and are connected to the suction motor, which is housed in a box-shaped body which normally also contains the means for storing the sucked-up dust, by means of a flexible section which is also tube-shaped and of suitable length; accessories are mounted alternately at the end of the abovementioned rigid section, depending on the operation to be performed, said accessories being able to be engaged in bayonet fashion on the distal end thereof.

These tubes, as mentioned, are rigid so as to allow the user to perform the operations necessary for pushing the sucking end thereof in any direction, including between the gaps and spaces which are present between the bottom of furniture and the floor of the room where they are arranged.

The known rigid tubes are straight along practically the whole of their length; however, in order to facilitate handling thereof by the user, they are normally equipped with a short section curved at an obtuse angle and located in the vicinity of the distal end where the accessories are engaged so that the terminal part thereof may be kept substantially parallel to the floor; as a result it is able to be introduced underneath the furniture, into the abovementioned spaces, while allowing easy gripping by the user with respect to whom the tube is slightly inclined and directed upwards relative to the horizontal, thus allowing him/her to keep the top part of their body in a substantially upright position.

This arrangement is only partly effective in many cases, in particular when the spaces to be cleaned between floor and bottom of the furniture are substantially deep or of limited height; this situation, despite the bent portion provided in known tubes, nevertheless obliges the user to stoop down and bend forwards repeatedly the top part of the body in order to push the sucking end of the tube to the end of the spaces.

Finally, the abovementioned bent portion itself, in some cases, becomes an element preventing said end from being reached owing to the interference which is created with the bottom edges of the furniture.

WO 00 65978 A, which is considered the closest prior art and will be also referred as D1, discloses a flexible tube equipping vacuum-cleaners or the like comprising a plurality of flexible joints. The joints are ball and socket joints cooperating with each other which make possible for the joint to be bent from one horizontal position to an angled position.

The solution according to D1 has several disadvantages. The first main disadvantage is that no sealing means are provided in each joint. This means that dust can easily exit outside from the interspaces existing between a joint and the next one. Furthermore, the dust can block the ball joint. This in turn means that the tube could loose flexibility and become hard to be operated. Still furthermore, the above mentioned interspaces degrade the dust suction power and this is highly undesirable.

A further disadvantage of the tube according to D1 is that bending is permitted only in one direction as an open space 13 is created only between the rear upper portion of the first part of a ball joint and the front upper portion of the first part 7 of an adjacent ball joint. This, in some circumstances, could be an operational limitation.

WO 01 97673 A (which is earlier than the priority date of the present application but it has been published after such a date) teaches a flexible tube similar to the one of D1 where a flexible envelop is applied on the outside of the ball joints in the attempt to overcome the above mentioned inconveniences.

The main technical object of the present invention is that of eliminating the abovementioned drawbacks of the known art, by providing an articulated joint for rigid tubes equipping electric household appliances, which allows users to perform every operating manoeuvre without necessarily having to bend over repeatedly the top part of the body.

A further object of the present invention is that of providing an articulated joint for rigid tubes equipping electric household appliances avoiding any leakage of dust or any other suctioned material from the joint interspaces between two adjacent connecting joints. Profitably, this will result in an articulated joint for rigid tubes wherein the joints will not become blocked and the whole dust suction power will not become affected.

A still further object of the present invention is that of providing an articulated joint for rigid tubes equipping electric household appliances wherein bending is permitted both in a first positive direction (with respect to a linear straight direction) and in a second negative direction (still with respect to a linear straight direction).

Within the context of this technical task, another object of the present invention is that of fulfilling the above tasks with a simple structure which is relatively easy to implement in practical terms and has an efficient mode of operation as well as a relatively low cost.

This task and these objects are all achieved by the articulated joint for rigid tubes equipping electric household appliances according to claim 1.

Further characteristic features and advantages of the present invention will emerge more clearly from the detailed description of a preferred, but not exclusive embodiment of an articulated joint for rigid tubes equipping electric household appliances, illustrated by way of a non-limiting example in the accompanying plates of drawings, in which:

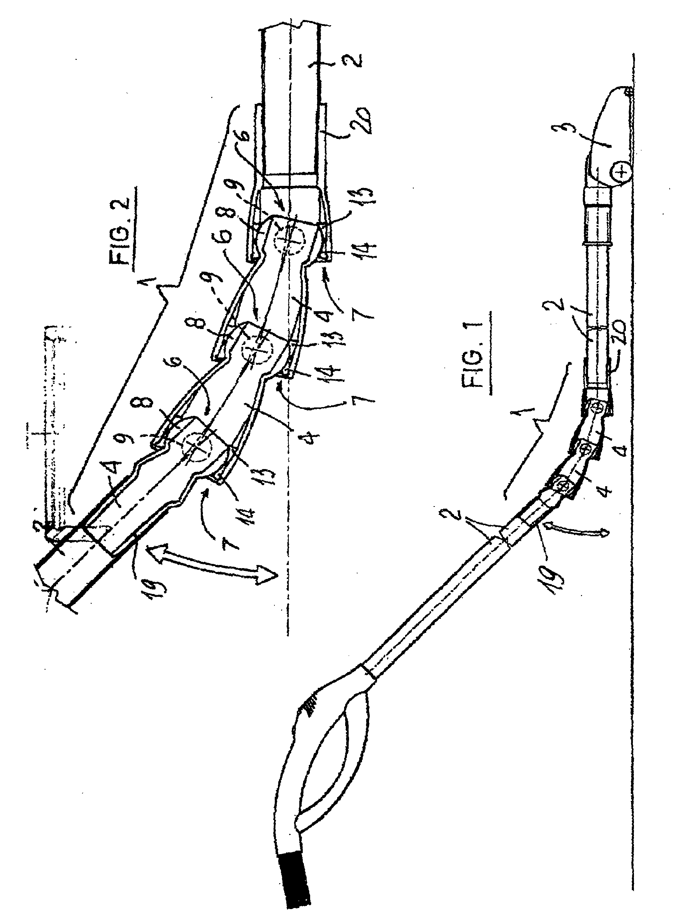

Figure 1 is a side view of an electric household appliance, in the case in question a vacuum cleaner, with the suction tube equipped with the articulated joint according to the invention;
Figure 2 is a detailed view, on a slightly larger scale, of the articulated joint according to the invention;

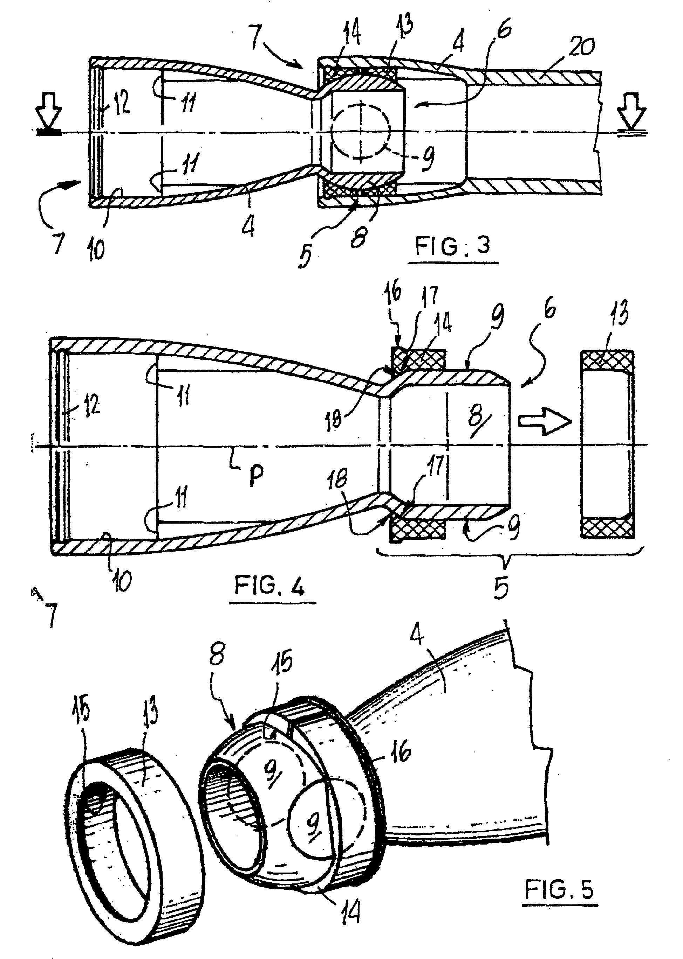

Figure 3 is a cross-sectional detail of the connection between two adjacent modular elements forming the articulated joint according to the invention;
Figure 4 is a detailed view, on a further enlarged scale, of a step involving assembly of the articulated joint according to the invention;
Figure 5 shows, in perspective and on a larger scale, the connection zone of two adjacent modular elements forming the articulated joint according to the invention, during assembly.

With particular reference to these figures, 1 denotes overall an articulated joint for rigid tubes 2 equipping electric household appliances, in the specific case a vacuum cleaner 3.

The articulated joint 1, which can be arranged between two tubes sections 2 along any point thereof, consists of a series of modular elements 4 which are axially hollow and can be joined together in series with each other, uninterruptedly, using coupling means 5 with a single degree of freedom, able to allow rotation of each modular element 4 with respect to the adjacent elements in a single and common plane of lie indicated by "P" in the figures.

Each of the modular elements 4 has a male end 6 and a female end 7 for forming the connection with the respectively female 7 and male 6 mating ends of adjacent modular elements 4.

In particular, the male end 6 forms a head 8 which has a substantially spherical profile, but is bilaterally sectioned and delimited by two flat surfaces 9 parallel to the abovementioned common plane of lie "P".

The female end 7 forms a receptacle 10 for receiving the abovementioned male end 6 of an adjacent modular element 4, after arrangement of coupling means 5 in between; moreover, internally it is provided with a contact shoulder 11 for the coupling means and, in the region of the access mouth, with at least one internal perimetral groove 12 for retaining said means.

The coupling means 5 are formed by at least one pair of rings 13 and 14 which form central coaxial through-openings 15, which have the reverse shape of the transverse and longitudinal profile of the head 8 and which can be fitted onto it one after another; both the rings 13 and 14 can be inserted with pressure inside the receiving receptacle 10.

The first 13 of said rings is able to be positioned up against the shoulder 11, while the second ring 14 is designed to retain the head 8 inside the receptacle 10.

The second retention ring 14 also forms perimetrally on the outside a first radially projecting edge 16 which can be engaged unidirectionally, namely without the possibility of return, in an interlocking manner with the internal perimetral groove 12 of the receiving receptacle 10; inside, the same second ring 14 forms a second perimetral edge 17 which is slightly tapered in the centripetal direction and can be engaged with the rear counter-tapered portion 18 of the spherical profile of the head 8.

Advantageously, the coupling means 5 perform a sealing function and avoid any leakage or exit of suctioned material from the tube. Furthermore, they avoid any reduction of suction power. Thus, at least one of the first ring 13 and second ring 14 seals the interstice between the male and female ends 6 and 7. Profitably, at least one of the first and second rings is made of Teflon or the like. In other words, the coupling means 5 operate as single sealing means. "Single sealing means" stands for separate sealing means which could be connected to each separate modular element and operate between the male and female ends which do not operate in direct contact one with each other.

The first proximal modular element 4, the term "proximal" being understood as that closest to the user, is also provided with a mouthpiece 19 which can be fitted inside or outside the mating end of the rigid tube 2; the distal opposite modular element 4 is also provided, like the proximal element, with a mouthpiece 20 which can be fitted inside or outside the mating end of the rigid tube 2 which connects it to the vacuum cleaner 3.

The mode of operation of the invention is as follows: the joint 1 is inserted at a prechosen point along a tube 2, separating the two component sections from each other at that point and engaging them on or inside the mouths 19 and 20 of the modular end elements 4 of the joint 1.

The heads 8 of the modular elements 4 are able to rotate inside the rings 13 and 14 solely in the common plane of lie "P" and allow the rotation of each of them with respect to the adjacent elements exclusively in said plane "P"; any other movement is prevented by the engagement of the sides of the openings 15 of the rings 13 and 14 with the flat surfaces 9 of each head 8.

In this way the joint 1 flexes in the plane "P" like a kind of dorsal spine, allowing the user to keep the top of their body perfectly upright during operation of the vacuum cleaner 3.

Assembly of the joint 1 is performed by inserting onto the head 8 of a modular element 4 firstly the second ring 14 until the second internal edge 17 thereof engages with the counter-tapered portion 18 of the same head 8.

Then the first ring 13 is inserted with pressure into the receptacle 10 of an adjacent preceding modular element 4 until it comes into contact with the shoulder 11; then the head 8 already equipped with the second ring 14 is also introduced into the receptacle 10, also forcing the said ring until the perimetral edge 16, which advantageously has its cross-section oriented so as to be retained without return, engages inside the groove 12.

Proceeding in a similar manner with other modular elements 4, it is possible to form the articulated joint 1 to the desired length.

It has thus been possible to show how the invention described achieves the proposed objects.

The invention thus conceived may be subject to modifications and variations all falling within the scope of protection of the following claims.

In practice the materials used, as well as the dimensions, may be of any nature in accordance with requirements.

## Claims

1. Articulated joint (1) for rigid pipes (2) equipping electric household appliances (3), the articulated joint comprising a series of axially hollow modular elements (4) which can be joined together in series with each other uninterruptedly using coupling means (5) with a single degree of freedom able to allow rotation of each modular element with respect to the adjacent elements in a single common plane of lie (P), wherein each of said modular elements (4) has a male end (6) forming a head (8) and a female end (7) with a receiving receptacle (10), **characterized in that** said coupling means (5) comprises sealing means for providing sealing between adjacent modular elements, wherein said coupling means (5) consist of at least one pair of rings (13, 14) which form central coaxial through-openings (15), which have the reverse shape of the transverse longitudinal profile of said head (8) and which can be fitted thereon, one after another, both said rings (13, 14) being inserted with pressure inside said receiving receptacle (10).

2. Articulated joint (1) according to Claim 1, **characterized in that** each of said modular elements (4) has a male end (6) and a female end (7) for engagement with the respectively female (7) and male (6) mating ends of adjacent modular elements (4).

3. Articulated joint (1) according to Claims 1 and 2, **characterized in that** said male end (6) forms a head (8) with a substantially spherical profile, which is bilaterally sectioned and delimited by two flat surfaces (9) parallel to said common plane of lie (P).

4. Articulated joint (1) according to Claims 1 and 2, **characterized in that** said female end (7) forms a receptacle (10) for receiving the male end (6) of an adjacent modular element (4), after arrangement of said coupling means (5) in between.

5. Articulated joint (1) according to Claims 1 and 4, **characterized in that** said female end (7) forms inside said receiving receptacle (10) a contact shoulder (11) for said coupling means (5) and, in the region of the access mouth, at least one internal perimetral groove (12) for retaining said coupling means (5).

6. Articulated joint (1) according to Claim 1, **characterized in that** a first (13) of said rings comes into contact against said shoulder (11) of said receiving receptacle (10) and a second ring (14) retains said head (8) therein.

7. Articulated joint (1) according to Claim 6, **characterized in that** said second retaining ring (14) is divided diametrally into two half-rings and forms perimetrally on the outside a first radially projecting edge (16) for interlocking engagement with said internal perimetral groove (12) of said receiving receptacle (10) and on the inside a second perimetral edge (17) slightly tapered centripetally for engagement with the counter-tapered rear portion of said spherical profile of said head (8).

8. Articulated joint (1) according to any of Claims 1-7, **characterized in that** said coupling means are made, at least partially, of Teflon.

9. Articulated joint (1) according to Claim 1, **characterized in that** the first proximal modular element (4) is provided with a mouthpiece (19) which can be fitted inside or outside the mating end of the rigid tube (2) and **in that** the distal opposite modular element (4) is provided with a mouthpiece (20) which can be fitted inside or outside the mating end of the rigid tube (2) which connects it to the electric household appliance (3).

10. Joint which can be articulated according to Claim 9, **characterized in that** said mouthpieces (19) (20) are dimensionally predefined for universal adaptation to said rigid tubes (2) of said electric household appliances (3).

## Patentansprüche

1. Gelenkige Verbindung (1) von festen Rohren (2) für elektrische Haushaltsgeräte (3), wobei die gelenkige Verbindung eine Reihe von axial hohlen Modulelementen (4) aufweist, die miteinander in Reihe unter Verwendung von Kupplungsmitteln (5) mit einem einzelnen Freiheitsgrad, der eine Drehung jedes Modulelementes in Bezug auf die benachbarten Elemente in einer einzelnen gemeinsamen Lageebene (P) erlaubt, ununterbrochen verbunden werden können, wobei jedes der Modulelemente (4) ein männliches Ende (6), das einen Kopf (8) bildet, und ein weibliches Ende (7) mit einem Aufnahmebehältnis (10) aufweist,
**dadurch gekennzeichnet,**
**dass** das Kupplungsmittel (5) Abdichtungsmittel zum Bereitstellen einer Abdichtung zwischen benachbarten Modulelementen aufweist, wobei die Kupplungsmittel (5) aus zumindest einem Paar Ringen (13, 14) bestehen, die zentrale koaxiale Durchgangsöffnungen (15) bilden, welche die invertierte Form des quer verlaufenden Längsprofils des Kopfes (8) aufweisen, und welche einer nach dem anderen darauf angelegt werden können, und beide Ringe (13, 14) unter Druck innerhalb des Aufnahmebehältnisses (10) eingesetzt sind.

2. Gelenkige Verbindung (1) nach Anspruch 1,
**dadurch gekennzeichnet,**
**dass** jedes der Modulelemente (4) ein männliches Ende (6) und ein weibliches Ende (7) zum Eingriff mit den entsprechenden weiblichen (7) und männlichen (6) Anschlussenden der benachbarten Modulelemente (4) aufweist.

3. Gelenkige Verbindung (1) nach Anspruch 1 oder 2,
**dadurch gekennzeichnet,**
**dass** das männliche Ende (6) einen Kopf (8) mit einem im Wesentlichen kugelförmigen Profil aufweist, das beidseitig durch zwei ebene Oberflächen (9), die parallel zu der gemeinsamen Lageebene (P) liegen, unterteilt und abgegrenzt ist.

4. Gelenkige Verbindung (1) nach Anspruch 1 oder 2,
**dadurch gekennzeichnet,**
**dass** das weibliche Ende (7) ein Behältnis (10) zum Aufnehmen des männlichen Endes (6) eines benachbarten Modulelementes (4) nach der zwischenliegenden Anordnung der Kupplungsmittel (5) bildet.

5. Gelenkige Verbindung (1) nach Anspruch 1 oder 4,
**dadurch gekennzeichnet,**
**dass** das weibliche Ende (7) innerhalb des Aufnahmebehältnisses (10) eine Kontaktschulter (11) für das Kupplungsmittel (5) bildet, und in dem Bereich der Zugangsmündung zumindest eine innere umlaufende Rille (12) zum Halten der Kupplungsmittel (5) bildet.

6. Gelenkige Verbindung (1) nach Anspruch 1,
**dadurch gekennzeichnet,**
**dass** ein erster (13) der Ringe gegen die Schulter (11) des Aufnahmebehältnisses (10) in Kontakt kommt, und ein zweiter Ring (14) den Kopf (8) darin hält.

7. Gelenkige Verbindung (1) nach Anspruch 6,
**dadurch gekennzeichnet,**
**dass** der zweite Haltering (14) diametral in zwei Halbringe unterteilt ist, und auf der Außenseite umlaufend eine erste radial vorstehende Kante (16) zum verblockenden Eingriff mit der inneren umlaufenden Rille (12) des Aufnahmebehältnisses (10) bildet, und auf der Innenseite eine zweite umlaufende Kante (17), die sich leicht zentripetal verjüngt, zum Eingriff mit dem sich entgegengesetzt verjüngenden hinteren Abschnitt des kugelförmigen Profils des Kopfes (8) bildet.

8. Gelenkige Verbindung (1) nach einem der Ansprüche 1 bis 7,
**dadurch gekennzeichnet,**
**dass** die Kupplungsmittel zumindest teilweise aus Teflon hergestellt sind.

9. Gelenkige Verbindung (1) nach Anspruch 1,
**dadurch gekennzeichnet,**
**dass** das erste nahe stehende Modulelement (4) mit einem Mundstück (19) versehen ist, das innerhalb oder außerhalb des Anschlussendes des festen Rohres (2) eingepasst werden kann, und dadurch, dass das fern stehende gegenüberliegende Modulelement (4) mit einem Mundstück (20) versehen ist, das innerhalb oder außerhalb des Anschlussendes des festen Rohres (2) eingepasst werden kann, das es mit dem elektrischen Haushaltsgerät (3) verbindet.

10. Verbindung, die gemäß Anspruch 9 gelenkig ausgebildet ist,
**dadurch gekennzeichnet,**
**dass** die Mundstücke (19, 20) für eine universelle Anpassung an die festen Rohre (2) der elektrischen Haushaltsgeräte (3) maßlich vorgegeben sind.

## Revendications

1. Joint articulé (1) pour des tuyaux rigides (2) équipant des appareils électriques domestiques (3), le joint articulé comprenant une série d'éléments modulaires axialement creux (4) qui peuvent être assemblés ensemble en série les uns par rapport aux autres en utilisant de manière ininterrompue des moyens de couplage (5) avec un seul degré de liberté pouvant permettre la rotation de chaque élément modulaire par rapport aux éléments adjacents dans un plan horizontal (P) commun unique, dans lequel chacun desdits éléments modulaires (4) a une extrémité mâle (6) formant une tête (8) et une extrémité femelle (7) avec un réceptacle de réception (10), **caractérisé en ce que** lesdits moyens de couplage (5) comprennent des moyens d'étanchéité pour fournir l'étanchéité entre des éléments modulaires adjacents, dans lequel lesdits moyens de couplage (5) se composent d'au moins une paire de bagues (13, 14) qui forment des ouvertures de passage coaxiales centrales (15) qui ont la forme inverse du profil longitudinal transversal de ladite tête (8) et qui peuvent être montées sur celle-ci, les unes après les autres, les deux bagues (13, 14) étant insérées par pression à l'intérieur dudit réceptacle de réception (10).

2. Joint articulé (1) selon la revendication 1, **caractérisé en ce que** chacun desdits éléments modulaires (4) a une extrémité mâle (6) et une extrémité femelle (7) pour la mise en prise avec les extrémités de couplage femelle (7) et mâle (6) respectivement des éléments modulaires (4) adjacents.

3. Joint articulé (1) selon les revendications 1 et 2, **caractérisé en ce que** ladite extrémité mâle (6) forme une tête (8) avec un profil sensiblement sphérique, qui est sectionné et délimité bilatéralement par deux surfaces plates (9) parallèles audit plan horizontal (P) commun.

4. Joint articulé (1) selon les revendications 1 et 2, **caractérisé en ce que** ladite extrémité femelle (7) forme un réceptacle (10) pour recevoir l'extrémité mâle (6) d'un élément modulaire (4) adjacent, après l'agencement desdits moyens de couplage (5) entre eux.

5. Joint articulé (1) selon les revendications 1 et 4, **caractérisé en ce que** ladite extrémité femelle (7) forme à l'intérieur dudit réceptacle de réception (10) un épaulement de contact (11) pour lesdits moyens de couplage (5) et, dans la région de la bouche d'accès, au moins une rainure périmétrale interne (12) pour retenir lesdits moyens de couplage (5).

6. Joint articulé (1) selon la revendication 1, **caractérisé en ce qu'**une première bague (13) desdits bagues vient en contact contre ledit épaulement (11) dudit réceptacle de réception (10) et une seconde bague (14) retient ladite tête (8) à l'intérieur de celle-ci.

7. Joint articulé (1) selon la revendication 6, **caractérisé en ce que** ladite seconde bague de retenue (14) est divisée diamétralement en deux demi-bagues et forme de manière périmétrale sur l'extérieur, un premier bord faisant radialement saillie (16) pour bloquer la mise en prise avec ladite rainure périmétrale interne (12) dudit réceptacle de réception (10) et sur l'intérieur, un second bord périmétral (17) légèrement progressivement rétréci de manière centripète pour la mise en prise avec la partie arrière progressivement rétrécie en sens inverse dudit profil sphérique de ladite tête (8).

8. Joint articulé (1) selon l'une quelconque des revendications 1 à 7, **caractérisé en ce que** lesdits moyens de couplage sont réalisés, au moins partiellement, à partir de Teflon.

9. Joint articulé (1) selon la revendication 1, **caractérisé en ce que** le premier élément modulaire proximal (4) est prévu avec une pièce d'embouchure (19) qui peut s'adapter à l'intérieur ou à l'extérieur de l'extrémité de couplage du tube rigide (2) et **en ce que** l'élément modulaire distal opposé (4) est prévu avec une pièce d'embouchure (20) qui peut s'adapter à l'intérieur ou à l'extérieur de l'extrémité de couplage du tube rigide (2) qui le raccorde à l'appareil électrique domestique (3).

10. Joint qui peut être articulé selon la revendication 9, **caractérisé en ce que** lesdits pièces d'embouchure (19) (20) sont prédéfinies du point de vue dimensionnel pour s'adapter de manière universelle auxdits tubes rigides (2) desdits appareils électriques domestiques (3).
